Europäisches Patentamt

European Patent Office

Office européen des brevets

(19)

(11) Publication number: 0 460 745 A1

# EUROPEAN PATENT APPLICATION

(12)

(21) Application number: 91201325.7

(22) Date of filing: 31.05.91

(51) Int. Cl.⁵: C01B 17/94

(30) Priority: 05.06.90 IT 2055290

(43) Date of publication of application:
11.12.91 Bulletin 91/50

(84) Designated Contracting States:
BE CH DE FR GB LI

(71) Applicant: ENICHEM SYNTHESIS S.p.A.
Via Ruggero Settimo 55
I-90139 Palermo(IT)

(72) Inventor: Villanti, Alberto
Viale delle Rimembranze di Lambrate 9
I-20134 Milano(IT)

(74) Representative: Roggero, Sergio et al
Ing. Barzanò & Zanardo Milano S.p.A. Via
Borgonuovo 10
I-20121 Milano(IT)

(54) Process for regenerating, by means of hydrogen peroxide, spent sulphuric acid from nitration reactions.

(57) Spent sulfuric acid from organic nitration reactions is submitted to a liquid/liquid extraction with an organic solvent immiscible with sulfuric acid, in order to remove nitric acid and nitrous acid, as well as the nitration residues; is subsequently concentrated, up to a concentration of 90% by weight, or higher; and is finally submitted to an oxidation treatment with hydrogen peroxide, at a temperature of from 80 to 180°C. A purified sulfuric acid is recovered as a clear, colourless liquid free, or substantially free, from organic impurities.

EP 0 460 745 A1

The present invention relates to a process for treating and recovering the constituents of spent sulfuric acid coming from reactions of nitration of organic compounds.

In various commercial processes of sulfonation of organic compounds, considerable amounts are generated of spent sulfuric acid containing such impurities as organic byproducts, in particular aryl-sulfonic acids.

In Italian patent applications Nos. 22,988 A/88 of Dec. 16th, 1988 and 22,006 A/89 of Oct. 12th, 1989, to the same Applicant's name, a process for the treatment of such effluents is disclosed, which makes it possible high-purity sulfuric acid, as well as the organic fraction contained in the effluent, to be recovered.

Also the commercial nitrations originate large amounts of spent sulfuric acid containing such impurities as nitric acid and nitrous acid, as well as organic residues from the nitration. The disposal of these waste streams constitutes a severe technical problem, for which a satisfactory solution was not found heretofore.

Therefore, the purpose of the present invention is a simple and advantageous process for the treatment of such sulfuric waste streams, which makes it possible the constituents to be recycled to a practically complete extent to the nitration process, with the problem of their disposal being hence solved, and with a saving in raw materials being additionally achieved.

In accordance therewith, the present invention relates to a process for the treatment of spent sulfuric acid coming from organic nitration reactions, containing such impurities as nitric acid and nitrous acid and the residues from the nitration, and for recovering the constituents thereof, characterized in that:

(a) said spent sulfuric acid is submitted to a liquid/liquid extraction with an organic solvent immiscible with sulfuric acid;

(b) the water content of said acid after the extraction in the (a) step is reduced, until the concentration of said acid is increased up to a level of at least 90% by weight;

(c) the acid concentrated in the (b) step is submitted to an oxidation treatment with hydrogen peroxide, by operating at a temperature comprised within the range of from 80 to 180°C; and

(d) the purified sulfuric acid is recovered as a clear, colourless liquid free, or substantially free, from organic impurities.

In the (a) step of the process according to the present invention, the spent sulfuric acid originating from a nitration, generally having a concentration of from 60 to 85% by weight, is submitted to a treatment of liquid/liquid extraction, mainly designed to eliminate, or, at least, minimize, the contents of nitric acid and nitrous acid, and of the nitration residues.

The organic solvents useful for such a purpose are the either non-halogenated or halogenated, in particular chlorinated, either straight or branched aliphatic hydrocarbons and aromatic hydrocarbons which are liquid under the extraction conditions. Specific examples of such solvents are benzene, monochloro-benzene, meta-dichloro-benzene, toluene, xylene, kerosene, and carbon tetrachloride. The aromatic hydrocarbons and clorinated aromatic hydrocarbons are preferred because, by getting more easily nitrated under the extraction conditions, they remove any traces of nitric acid and nitrous acid contained in the spent sulfuric acid stream.

According to a particular form of practical embodiment, the solvent used for the extraction is the same organic compound which is submitted to nitration in the same process which yielded the spent sulfuric acid.

The extraction is normally carried out at a temperature comprised within the range of from room temperature, (i.e., 20-25°C), up to a value close to the boiling point of the lowest-boiling constituents in the mixture, and, preferably, at a temperature comprised within the range of from 30 to 70°C. One single extraction or a plurality of extraction in cascade may be carried out, or the extraction can be carried out in continuous mode, anyway with a total solvent amount which may generally range from 0.1 to 3 volumes per each volume of spent sulfuric acid submitted to extraction. For such purpose, the apparatuses normally used for liquid/liquid extraction can be used.

When the spent sulfuric acid contains excessively large amounts of nitrous acid, one can advantageously pre-treat the spent sulfuric acid in order to oxidate the nitrous acid into nitric acid. Such an oxidation can be performed by adding small amounts of hydrogen peroxide and operating at higher-than-room temperatures, e.g., at temperatures of the order of from 40 to 50°C.

In the (b) step of the process according to the present invention, the water content in the acid coming from the (a) step is reduced, so as to increase the concentration of sulfuric acid up to a value of at least 90% by weight and preferably up to a value of the order of 95-96% by weight. The decrease in water content can be carried out by the normal techniques of evaporation under vacuum. According to an alternative route, sulfur trioxide can be added in such an amount as to increase the concentration of sulfuric acid up to the desired value. For such purpose, neat sulfur trioxide or oleum, with any concentrations of sulfur trioxide, e.g., with a concentration comprised within the range of from 10 to 65% by weight, can be used. The use of neat sulfur trioxide or high-concentration oleum will be preferred in general, in order to prevent too large increases in the overall mass to be treated.

In the (c) step of the process according to the present invention, the concentrated sulfuric acid coming from the (b) step is submitted to an oxidative treatment with hydrogen peroxide. For such a treatment, hydrogen peroxide at a concentration of from 30 to 90% by weight and preferably of the order of 60% by weight can be used. The amount of hydrogen peroxide used (referred to 100% hydrogen peroxide) will be normally comprised within the range of from 3 to 12 parts by weight per each 100 parts by weight of the acid to be treated, and will normally range from 5 to 8 parts by weight. The treatment temperatures can be generally comprised within the range of from 80 to 180°C and preferably will be of from 120 to 150°C. The process is carried out advantageously by gradually adding hydrogen peroxide to the concentrated sulfuric acid, so as to prevent hydrogen peroxide from accumulating in the reaction medium.

At the end of the oxidative treatment, the purified sulfuric acid, generally having a concentration of from 84 to 94% by weight, is recovered as a clear, colourless liquid free, or substantially free, from organic impurities. Of course, should a higher-concentration sulfuric acid be desired, the purified acid can be submitted to a further step of concentration by means of water evaporation, or by means of the addition of sulfuric trioxide or oleum.

The process according to the present invention is simple and cheap, and makes it possible the spent sulfuric acid from nitration processes to be recovered and recycled to a practically complete extent, with the environmental problems being thus overcome.

The following experimental examples are reported for the purpose of better illustrating the invention.

Example 1

In this example, a spent sulfuric acid deriving from the nitration of monochlorobenzene is submitted to the regeneration treatment.

1 kg of such a spent sulfuric acid, containing 74% of $H_2SO_4$, is submitted twice to liquid/liquid extraction, each time with 400 ml of monochlorobenzene, by operating at 50°C.

The residual sulfuric acid phase after the extraction is submitted to concentration by distillation at the temperature of 200°C and under a pressure of 15 torr, until 771 g of a residue is obtained, which contains 3.6% by weight of water.

This residue is heated up to a temperature of 130-140°C, and 123 g of hydrogen peroxide at 60% is gradually added to it, during a 1-hour period. When addition is complete, the treated mass is cooled and a purified, clear sulfuric acid is discharged, which has a concentration of 87% by weight, has a colour index lower than 20 APHA, and a COD (chemical oxygen demand) of 0.27 g/l.

Example 2

The process is carried out as in Example 1. 1 kg of spent sulfuric acid from the nitration of monochlorobenzene is treated. Said spent sulfuric acid is extracted twice, each time with 450 ml of carbon tetrachloride. At the end of the treatment with hydrogen peroxide, a purified, clear sulfuric acid is obtained, which has a concentration of 86.2% by weight, with a water content of 13.7% by weight, and having a COD (chemical oxygen demand) of 0.22 g/l.

Example 3

In this example, a spent sulfuric acid from the nitration of meta-dichlorobenzene is submitted to the regeneration treatment.

1 kg of such a spent sulfuric acid, containing 73% of $H_2SO_4$ and 2.4% by weight of nitrous acid, is pretreated with 32 g of hydrogen peroxide at 60% by weight, by operating at 40°C.

The so treated acid is submitted twice to the extraction, each time with 450 ml of meta-dichlorobenzene, by operating at 50°C.

The process is then continued as in Example 1, and 850 g of a purified, clear sulfuric acid is discharged, which has a concentration of 86% by weight, a colour index of 25 APHA, and a COD of 0.3 g/l.

Example 4

The process is carried out as in Example 1, by treating 1 kg of spent sulfuric acid from the nitration of monochlorobenzene. Said spent sulfuric acid is submitted three times to the extraction, each time with 300 ml of kerosene. 840 g of purified, clear sulfuric acid is obtained, which has a concentration of 84.7% by weight and a COD (chemical oxygen demand) of 0.61 g/l.

Example 5

The process is carried out as in Example 1, by treating 1 kg of spent sulfuric acid coming from the nitration of toluene. Said spent sulfuric acid is submitted twice to the extraction, each time with 600 ml of toluene. A purified, clear sulfuric acid is obtained, which has a concentration of 88% by weight, a colour index of 35 APHA, and a COD of 0.9 g/l.

Example 6

The process is carried out as in Example 1, by treating 1 kg of spent sulfuric acid, containing 70% by weight of $H_2SO_4$, deriving from a benzene nitration process, which spent sulfuric acid is submitted twice to the extraction, each time with 500 ml of benzene. 805 g of purified, clear sulfuric acid is obtained, which has a concentration of 87% by weight and a COD (chemical oxygen demand) of 0.42 g/l.

Example 7

500 g of a spent sulfuric acid containing 74% by weight of $H_2SO_4$ and 23% by weight of water, deriving from a monochlorobenzene nitration process, is submitted to extraction as in Example 1, and then 830 g of oleum at 40% by weight of sulfur trioxide is added. The resulting mixture is then treated at 130°C with 67 g of hydrogen peroxide at 60%. A purified, clear sulfuric acid with a concentration of 93.4%, a colour index of 10 APHA and a COD of 0.1 g/l is obtained.

**Claims**

1. Process for the treatment of spent sulfuric acid coming from organic nitration reactions, containing such impurities as nitric acid and nitrous acid and the residues from the nitration, and for recovering the constituents thereof, characterized in that:
   (a) said spent sulfuric acid is submitted to a liquid/liquid extraction with an organic solvent immiscible with sulfuric acid;
   (b) the water content of said acid after the extraction in the (a) step is reduced, until the concentration of said acid is increased up to a level of at least 90% by weight;
   (c) the acid concentrated in the (b) step is submitted to an oxidation treatment with hydrogen peroxide, by operating at a temperature comprised within the range of from 80 to 180°C; and
   (d) the purified sulfuric acid is recovered as a clear, colourless liquid free, or substantially free, from organic impurities.

2. Process according to claim 1, characterized in that the organic solvent used in the (a) step is selected from the group consisting of the either non-halogenated or halogenated, in particular chlorinated, either straight or branched aliphatic, hydrocarbons and aromatic hydrocarbons which are liquid under the extraction conditions. and preferably is benzene, monochlorobenzene, meta-dichloro-benzene, toluene, xylene, kerosene, or carbon tetrachloride.

3. Process according to claim 1, characterized in that said organic solvent used in the (a) step is the organic compound which is submitted to nitration in the same process which yielded the spent sulfuric acid.

4. Process according to claim 1, characterized in that in said (a) step, the process is carried out at a temperature comprised within the range of from room temperature, (i.e., 20-25°C), up to a value close to the boiling point of the lowest-boiling constituents in the mixture, and, preferably, at a temperature comprised within the range of from 30 to 70°C, with a solvent amount which may range from 0.1 to 3 volumes per each volume of spent sulfuric acid submitted to extraction.

5. Process according to claim 1, characterized in that the spent sulfuric acid is pre-treated in order to oxidate the nitrous acid to yield nitric acid, by adding small amounts of hydrogen peroxide and operating at temperatures of the order of from 40 to 50°C.

6. Process according to claim 1, characterized in that in said (b) step, the water content in the acid coming from the (a) step is reduced by vacuum-evaporation or by means of the addition of sulfur trioxide or oleum, until the concentration of the acid is increased up to a value of at least 90% by weight and preferably up to a value of the order of 95-96% by weight.

7. Process according to claim 1, characterized in that in said (c) step, the concentrated sulfuric acid from the (b) step is submitted to a treatment with hydrogen peroxide at a concentration of from 30 to 90% by weight and preferably of the order of 60% by weight, in an amount (referred to 100% hydrogen peroxide) of from 3 to 12 parts by weight per each 100 parts by weight of the acid to be treated, and preferably of the order of from 5 to 8 parts by weight, at a temperature comprised within the range of from 80 to 180°C and preferably of from 120 to 150°C.

8. Process according to claim 7, characterized in that hydrogen peroxide is added gradually.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-B-2 020 867 (BASF AG) <br> * claim 1 * <br> – – – | 1 | C 01 B 17/94 |
| A | DE-A-2 404 613 (AIR PRODUCTS AND CHEMICALS) <br> * example 2 * <br> – – – – – | 1 | |

|  |  |
|---|---|
|  | TECHNICAL FIELDS SEARCHED (Int. Cl.5) |
|  | C 01 B 17/00 |

The present search report has been drawn up for all claims

| Place of search | Date of completion of search | Examiner |
|---|---|---|
| Berlin | 02 September 91 | CLEMENT J.P. |

CATEGORY OF CITED DOCUMENTS
X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document